# EUROPÄISCHE PATENTANMELDUNG

(11) **EP 2 187 118 A1**
(43) Veröffentlichungstag der Anmeldung: **19.05.2010**
(21) Anmeldenummer: 08105790.3
(22) Anmeldetag: 13.11.2008
(51) Int. Cl.: F21V 21/26, E05D 11/08, F16C 11/04, F16C 11/10

(54) **Gelenkarm mit Drehgelenk**

(71) Anmelder: Derungs Licht AG, 9200 Gossau (CH)
(72) Erfinder: Cessellli, Marco, 9000 St. Gallen (CH)
(74) Vertreter: Hepp, Dieter

(57) **Zusammenfassung**

Die Erfindung betrifft einen Gelenkarm (1; 201; 301) zur Halterung eines Gegenstandes (2), insbesondere einer Lampe, mit mindestens einem Drehgelenk (3, 3', 3"; 103; 203; 303), bestehend aus mindestens zwei relativ zu einander gegen eine Reibkraft drehbaren Gelenkteilen (4, 5; 104, 105; 204, 205; 304, 304), einen Gelenkarm (1; 201; 301) mit einem anzubringenden Gegenstand (2), die Verwendung einer Schlingfeder (215; 315) in einem Gelenkarm (1; 201; 301) und ein System zur Erstellung eines Gelenkarmes (1; 201; 301).

Den Gelenkteilen (4, 5; 104, 105; 204, 205; 304, 304) ist jeweils eine Kontaktfläche (112, 113; 212; 312) zugeordnet, die miteinander in einer Reibverbindung stehen, wobei die Kontaktflächen (112, 113; 212; 312) derart ausgelegt sind, dass die Reibkraft von der Drehrichtung (7, 11; 107, 111; 207, 211) abhängig ist, insbesondere in der einen Drehrichtung (7; 107; 207) grösser als in der anderen Drehrichtung (11; 111; 211) ist.

Dazu ist bevorzugt eine Schlingfeder (215; 315) mit dem ersten Gelenkteil (4; 204; 304) reibschlüssig und mit dem zweiten Gelenkteil (5; 205; 305) insbesondere formschlüssig verbindbar.

## Beschreibung

Die Erfindung betrifft einen Gelenkarm zur Halterung eines Gegenstandes, insbesondere einer Lampe, mit mindestens einem Drehgelenk, bestehend aus mindestens zwei relativ zu einander gegen eine Reibkraft drehbaren Gelenkteilen, einen Gelenkarm mit einem anzubringenden Gegenstand, die Verwendung einer Schlingfeder in einem Gelenkarm und ein System zur Erstellung eines Gelenkarmes.

Ein beweglicher Gelenkarm zum Halten von Leuchten und anderweitigen Gegenständen erlaubt das Verändern und Arretieren von Positionen des zu haltenden Gegenstandes. Dabei kann der Gegenstand im Rahmen der Reichweite des Gelenkarmes bevorzugt in jede beliebige Position gebracht und dort gehalten werden.

Der Gelenkarm weist dazu bevorzugt ein Drehgelenk mit Selbsthemmung auf, welche der Gewichtskraft des zu haltenden Gegenstandes entgegen wirkt.

Aus dem Stand der Technik sind Drehgelenke mit einer Reibkupplung bekannt, bei denen zum Beispiel die Selbsthemmung durch die Reibungskraft mit einer Stellschraube eingestellt werden kann. Zum Bewegen des Gegenstandes wird die Stellschraube gelöst, zum Arretieren festgezogen. Die Bedienung ist eher umständlich, da beide Hände gebraucht werden und sich die Stellschraube in der Regel nicht in der Nähe des Gegenstandes sondern am Drehgelenk befindet.

Für Gegenstände mit geringem Gewicht kann alternativ eine fest eingestellte Reibungskraft vorgesehen sein, die ausreicht, um der Gewichtskraft entgegen zu wirken und die beim Verstellen der Position zu überwinden ist. Bei einer Positionsveränderung muss der Bediener die Gewichtskraft des Gegenstandes und die Reibungskraft des Gelenks aufbringen.

In anderen bekannten Gelenkarmen wird die Last durch ein Gegengewicht oder eine Feder kompensiert, insbesondere sind Gelenkarme bekannt, die Parallelogrammführungen mit einer Zugfeder aufweisen. Aus GB 636775 und DE 9419 315 sind ausserdem Gelenkarme bekannt, bei denen im Drehgelenk eine mit beiden Gelenkteilen in Wirkverbindung stehende Torsionsfeder angeordnet ist. Die Federkraft der Torsionsfeder wirkt der Gewichtskraft des zu haltenden Geräts entgegen.

Gelenkarme mit Gegengewichten und Federn sind häufig konstruktiv aufwändig. Gegengewichte und Zugfedern benötigen Raum und erschweren die Kabelführung, wenn die zu haltenden Gegenstände elektrisch versorgt werden müssen.

Aus DE 9419 315 ist ausserdem ein Drehgelenk mit einer Ratschkupplung bekannt, bei dem sich ein Kupplungselement in der einen Drehrichtung gemeinsam mit dem ersten Gelenkteil und in der anderen Drehrichtung gemeinsam mit dem zweiten Gelenkteil bewegt. In der einen Richtung wird dabei eine Reibkraft überwunden, in der anderen Richtung laufen Rastzähne über eine Innenverzahnung. Auch dieses Drehgelenk ist konstruktiv aufwändig.

Der vorliegenden Erfindung liegt die Aufgabe zugrunde, die Nachteile des Bekannten zu überwinden und einen Gelenkarm zu schaffen, der ein konstruktiv einfaches Drehgelenk besitzt, das leicht zu verschwenken ist und eine zuverlässige Selbsthemmung aufweist.

Die Aufgabe wird gelöst durch einen Gelenkarm zur Halterung eines Gegenstandes, insbesondere einer Lampe, mit mindestens einem Drehgelenk, bestehend aus mindestens zwei relativ zueinander gegen eine Reibkraft drehbaren Gelenkteilen, mit den Merkmalen des Anspruchs 1.

Den Gelenkteilen ist jeweils mindestens eine Kontaktfläche zugeordnet und die Kontaktflächen der Gelenkteile stehen jeweils miteinander in einer Reibverbindung.

Die Reibung zwischen den Kontaktflächen ist die Gesamtheit der Kräfte an den Grenzfläche, die Ihre gegenseitige Bewegung hemmen oder gar verhindern.

Erfindungsgemäss sind die Kontaktflächen derart ausgelegt, dass die Reibkraft von der Drehrichtung abhängig ist, insbesondere in einer Drehrichtung grösser als in der entgegen gesetzten Drehrichtung.

Bevorzugt ist das Drehgelenk als Scharniergelenk ausgebildet.

Die Reib- oder Reibungskraft, also die Kraft, die mindestens überwunden werden muss, um die Kontaktflächen gegenseitig zu bewegen, hängt zum einen von der Normalkraft auf die Grenzfläche, zum andern von dem Reibungswiderstand ab. Dieser ist eine empirische Grösse, welcher die Stärke der Reibungskraft im Verhältnis zur Normalkraft angibt.

Der Reibungswiderstand hängt maßgeblich von verschiedenen Faktoren ab. Dazu zählen die Materialkombination, also der jeweiligen chemischen Zusammensetzungen der Kontaktflächen, die Oberflächenbeschaffenheiten der Kontaktflächen, wie die Textur oder die Rauhigkeit der Reibungspartner, die Temperatur und andere Umgebungsfaktoren, wie Luftfeuchtigkeit, Ölfilm, Staub usw..

Für die Auswahl der Reibungskraft kann also die Normalkraft und/oder der Reibungswiderstand variiert werden.

Im Gegensatz zu einem herkömmlichen Reibgelenk, bei welchem die Reibungskraft unabhängig von der Richtung ist, kann der erfindungsgemässe Gelenkarm so gestaltet werden, dass die zu überwindende Reibkraft entgegen der Schwerkraft des zu haltenden Gegenstandes kleiner ist, als die Reibkraft in Richtung der Schwerkraft. Das Anheben des zu haltenden Gegenstandes wird also erleichtert. In der anderen Richtung ist die Reibung hingegen gross genug, um der Schwerkraft entgegenzuwirken, sodass der Gelenkarm nicht unter dem Gewicht des Gegenstandes nachgibt.

Bei einer Bewegung des Drehgelenks in Richtung der Schwerkraft muss zwar eine grössere Reibungskraft überwunden werden, aber dies spielt nur eine untergeordnete Rolle, da der Benutzer in dieser Richtung ohnehin nur die Differenz zwischen Schwerkraft und Reibungskraft aufbringen muss.

Unter Schwerkraft wird im vorliegenden Fall die Kraftkomponente der Schwerkraft verstanden, welche zur Drehung des Drehgelenks beiträgt oder der Drehung entgegenwirkt.

Der erfindungsgemässe Gelenkarm erlaubt ein freies Positionieren des zu haltenden Gegenstandes, benötigt keine platz- oder konstruktionsaufwändigen Hilfsmittel, wie Ausgleichsgewichte oder Zugfedern. Der Verzicht auf die zusätzlichen Hilfsmittel führt zu geringeren Kosten bei der Herstellung der Gelenkarme.

Da die Hemmung durch eine Reibkraft entsteht, ist sie, anders als bei Federkräften, nicht abhängig von dem Winkel zwischen den Gelenkteilen. Das heisst, der Drehaufwand ist für die jeweilige Drehrichtung für den gesamten Winkelbereich gleich.

Die in Reibverbindung stehenden Kontaktflächen können direkt miteinander in Kontakt stehen oder mittels eines Reibkörpers.

Die Oberflächen können beispielsweise so ausgebildet sein, dass, wie bei einem Teppichflor, das gegenseitige Rutschen in einer Richtung leichter möglich ist, als in der anderen Richtung.

Die Kontaktflächen können unmittelbar mit den Gelenkteilen verbunden sein oder auf separaten Bauteilen ausgebildet sein, die jeweils mit dem einen oder anderen Gelenkteil verbunden oder verbindbar sind.

In einer bevorzugten Ausführungsform enthält das Drehgelenk eine Schlingfeder, die mit der Kontaktfläche des ersten Gelenkteils reibschlüssig und mit dem zweiten Gelenkteil insbesondere formschlüssig verbindbar oder verbunden ist.

Die Schlingfeder bildet die Kontaktfläche des zweiten Gelenkteils und steht in Reibkontakt mit der Kontaktfläche des ersten Gelenkteils.

Die Schlingfeder ist mit dem zweiten Gelenkteil derart verbunden oder verbindbar, dass sich die Schlingfeder mit dem zweiten Gelenkteil mitbewegt. Die Schlingfeder kann an das zweite Gelenkteil festgeschraubt, genietet oder geschweisst sein. Bevorzugt besteht jedoch eine Verbindung über einen Formschluss, bzw. lässt sich die Verbindung darüber herstellen. Über ein Scharniergelenk verbundenen Gelenkteile bieten ohnehin nur eingeschränkte Bewegungsfreiheitsgrade, so dass ein Formschluss ausreicht, um die Schlingfeder ausreichend an dem Gelenkteil zu fixieren.

In einer weiteren bevorzugten Ausführungsform des erfindungsgemässen Gelenkarms umfasst das erste Gelenkteil eine Welle, bezüglich derer die Schlingfeder koaxial angeordnet ist.

Die Schlingfeder übt auf die Welle eine Klemmkraft aus, die von ihrem Durchmesser, vom Material, von der Materialstärke und von der Windungszahl abhängt.

Die Oberfläche der Welle bildet die Kontaktfläche des ersten Gelenkarms. Der Schlingfeder kann so angeordnet sein, dass sie die Mantelfläche der Welle umschlingt. Die Welle kann auch rohrförmig ausgeführt sein und die Schlingfeder an der Innenfläche der Welle anliegen.

Die Welle kann fest mit dem ersten Gelenkteil verbunden sein, z.B. einteilig ausgeführt sein, angeschweisst, angeschraubt oder angenietet sein. Alternativ kann ein Form- oder Reibschluss zwischen erstem Gelenkteil und Welle bestehen.

Werden die Gelenkteile gegeneinander bewegt, so bewegt sich die Feder mit dem zweiten Gelenkteil mit und überwindet dabei eine Reibungskraft gegenüber der Welle. Diese ist in den beiden Drehrichtungen unterschiedlich gross, da die Klemmkraft, bzw. der Anpressdruck der Feder auf die Welle davon abhängt, ob die Feder bei der Drehung aufgeweitet oder so angespannt/angezogen wird, dass sich der Innendurchmesser tendenziell verkleinert.

Ist die Schlingfeder an der Aussenseite der Welle angebracht, dann kann sie in einer Richtung, nämlich in derjenigen, in welcher der Innenradius der Feder bei der Drehung etwas vergrössert wird, fast frei auf der Welle bewegt werden. In der anderen Drehrichtung wird die Feder angespannt, wobei der Innendurchmesser tendenziell abnimmt. Die Schlingfeder presst sich fester an die Welle und lässt sich somit schwerer gegen die Welle bewegen.

Liegt die Feder innerhalb einer Welle, so tritt der gegenteilige Effekt auf. In der einen Richtung wird der Radius der Feder verkleinert, sodass sich die Feder fast frei gegenüber der Welle bewegen lässt. In der anderen Richtung wird die Feder aufgeweitet, sodass sich der Radius vergrössert, sich die Feder von innen an die Welle presst und sich nur schwer gegenüber der Welle bewegen lässt.

Bevorzugt liegt in der einen Drehrichtung das Reibungsdrehmoment, also die Kraft, die bei einer bestimmten Länge des Kraftarm notwenig ist, in einem Bereich zwischen 2 Nm und 50 Nm, bevorzugt zwischen 8 Nm und 11 Nm, und in der anderen Drehrichtung zwischen 0.25 Nm und 10 Nm, bevorzugt zwischen 1.3 und 1.7 Nm.

Insbesondere werden der Durchmesser und/oder das Material der Welle und/oder der Durchmesser, das Material, die Materialstärke und/oder die Windungszahl der Schlingfeder entsprechend ausgelegt.

Vorteilhafterweise ist an dem Drehgelenk mindestens ein Anschlag vorgesehen, der den Drehwinkel zwischen dem ersten und dem zweiten Gelenkteil einschränkt.

Es können auch zwei Anschläge vorgesehen sein, sodass der Winkel zwischen den Gelenkteilen nur in einem bestimmten, vorgewählten Bereich liegen kann.

Die Einschränkung der gegenseitigen Drehung verhindert eine Überdrehung des Gelenks, bei der möglicherweise durch das Gelenk geführte Kabel zu Schaden kommen könnten.

Die Anschläge können auch einstellbar sein, so dass die Einschränkung der Bewegung an die räumlichen Gegebenheiten angepasst werden kann, und zum Beispiel ein Anstossen des zu haltenden Gegenstandes an einer Wand, an der Decke oder an weitere ortsfesten Gegenständen verhindert wird.

In einer vorteilhaften Ausführung der Erfindung bilden die Gelenkteile ein Reibgelenk mit einer zusätzlichen richtungsunabhängigen Reibkraft, insbesondere mit einer einstellbaren Reibungskraft.

Die zusätzliche, konstante Reibkraft bildet zum einen eine Art Offset, der unabhängig von der Drehrichtung überwunden werden muss. Selbst wenn die Feder ganz von der Welle abhöbe, wäre immer noch eine Hemmkraft vorhanden.

Zum anderen kann die zusätzliche Reibkraft bevorzugt eingestellt werden, womit das Drehgelenk in einer bestimmten Position fixiert werden kann und sich den Winkel zwischen den Gelenkteilen bei einem zufälligen oder unbeabsichtigten Anstossen nicht ändert.

Die Gelenkteile können beispielsweise als Halbschalen ausgeführt sein, die durch eine Verschraubung oder eine Steckverbindung beieinander gehalten werden. Diese Verbindung kann dafür genutzt werden, eine bestimmte Reibung zwischen den Gelenkteilen einzustellen.

Der Gelenkarm kann ausserdem zusätzlich mit weiteren Hemmelementen, zum Beispiel einer Zugfeder ausgestattet sein. Dies kann notwendig werden, wenn eine aussergewöhnlich schwere Last an dem Gelenkarm angebracht werden soll.

Die Aufgabe wird ausserdem gelöst durch einen Gelenkarm wie oben beschrieben mit einem zu haltenden Gegenstand, wobei die Reibkraft in der einen Drehrichtung mindestens so gross ist wie die Gewichtskraft des anzubringenden Gegenstandes. Dafür sind insbesondere die Welle und/oder die Schlingfeder entsprechend ausgelegt.

Erfindungsgemässe Gelenkarme sind insbesondere geeignet zum Halten von Leuchtkörpern, Lupen, Monitoren und Arbeitsgeräten, zum Beispiel medizinischen Geräten. Dazu kann der Gelenkarm an der Decke, am Boden, an der Wand oder an einem Standfuss befestigt werden. Mit dem Gelenkarm wird der zu haltende Gegenstand für seinen Einsatz in die bedarfsgerechte Position oder in eine Ruheposition gebracht. Die Vielfalt der möglichen zu haltenden Gegenstände führt zu einem entsprechenden Bedarf an geeigneten Gelenkarmen.

Der erfindungsgemässe Gelenkarm kann für Gegenstände mit einem bestimmten Gewicht dann benutzt werden, wenn das Drehgelenk, bzw. die dort wirkenden Reibungskraft an die Gewichtskraft angepasst ist. Dies kann leicht eingestellt werden, indem einen Feder mit entsprechender Klemmkraft oder eine Welle mit entsprechendem Durchmesser eingesetzt wird.

Die Aufgabe wird ausserdem gelöst durch die Verwendung einer Schlingfeder in einem Gelenkarm zur Halterung eines Gegenstandes, insbesondere einer Lampe, mit mindestens einem Drehgelenk, bestehend aus mindestens zwei relativ zu einander drehbaren Gelenkteilen und mindestens einer Welle, wobei die Schlingfeder mit der Welle reibschlüssig und mit dem zweiten Gelenkteil insbesondere formschlüssig verbindbar ist.

Die erfindungsgemässe Verwendung kann erfolgen, um einen Gelenkarm auszubilden, wie er oben beschrieben ist. Dabei bilden die Welle und die Schlingfeder jeweils einen Kontaktfläche, die miteinander in Kontakt stehen.

Welle und Feder können so aufeinander abgestimmt sein, dass sich Welle und Feder zwar gegeneinander in beide Richtungen drehen lassen, dass aber die Reibungskraft in der einen Drehrichtung grösser als in der anderen ist.

Welle und Feder können allerdings auch so aufeinander abgestimmt sein, dass in einer Drehrichtung, hier Sperrrichtung genannt, ähnlich wie bei einer Schlingfederkupplung, die Klemmkraft so gross wird, dass eine Haftreibung auftritt, die nicht ohne weiteres aufgebracht werden kann. Folglich lassen sich Welle und Schlingfeder in dieser Richtung nicht mehr gegeneinander bewegen.

Ist die Welle mit dem ersten Gelenkteil nicht fest verbunden, sondern ist gegenüber dem ersten Gelenkteil drehbar, so wirkt die Welle als Kupplungselement.

Die Kraft, die zum Schwenken des Drehgelenks aufgebracht werden muss, wird in der einen Richtung durch die Reibkraft zwischen Schlingfeder und Welle bestimmt, in der anderen Richtung durch den Drehwiderstand der Welle gegenüber dem ersten Gelenkteil.

Die Welle kann zum Beispiel in einer Reibverbindung mit dem ersten Gelenkteil stehen, insbesondere über ein Reibelement. Die zu überwindende Reibkraft ist grösser, als die Reibkraft zwischen Schlingfeder und Welle in freilaufender Richtung, aber kleiner als die Haftreibung zwischen Schlingfeder und Welle in sperrender Richtung.

Alternativ kann die Welle in Form einer Ratschkupplung mit Rastzähnen über einen Verzahnung gegenüber dem ersten Gelenkteil in einer Richtung gedreht werden. In der anderen Richtung ist die gegenseitige Bewegung zwischen Welle und erstem Gelenkteil gesperrt. In dieser Richtung kann sich allerdings die Schlingfeder gegenüber der Welle drehen.

Die Aufgabe wird weiterhin gelöst durch ein System zur Bildung eines Gelenkarms, insbesondere wie oben beschrieben, mit mindestens einem ersten und einem zweiten Gelenkteil sowie mindestens einer Schlingfeder. Dabei sind die Gelenkteile und die Schlingfeder so ausgebildet, dass die Schlingfeder mit dem ersten Gelenkteil reibschlüssig und mit dem zweiten Gelenkteil insbesondere formschlüssig verbindbar ist.

Für die Bildung eines Gelenkarms kann eine Schlingfeder derart ausgewählt werden, dass die gegenüber dem ersten Gelenkteil zu überwinden Reibungskräfte an die Gewichtskraft des zu haltenden Gegenstandes angepasst werden kann.

Bevorzugt umfasst das System zudem mindestens eine Welle. Die Reibungskraft kann dann eingestellt werden, indem eine Welle mit geeignetem Durchmesser verwendet wird.

Die Herstellung von Schlingfedern erfolgt in Regel mit einem geringen Toleranzbereich. Die Federn können problemlos für alle gängigen Gewichte eingesetzt werden, wenn sie mit den entsprechenden Wellen kombiniert werden. Diese lassen sich einfach und kostengünstig mit frei wählbaren Durchmessern herstellen.

Das System erlaubt die Bildung von Gelenkarmen, die optimal an die zu tragende Last angepasst werden können.

Die Erfindung wird nachfolgend in Ausführungsbeispielen anhand von Zeichnungen näher erläutert.

### Es zeigen

- Figur 1: eine Seitenansicht eines schematisch dargestellten Gelenkarms mit einem gehaltenen Leuchtkörper;
- Figur 2: eine erste Ausführungsform eines Drehgelenks in einer schematischen Schnittansicht gemäss einer Schnittlinie senkrecht zur Drehachse;
- Figur 3: eine zweite Ausführungsform eines Drehgelenks in einer schematischen Schnittansicht gemäss einer Schnittlinie senkrecht zur Drehachse;
- Figur 4: eine dritte Ausführungsform eines Drehgelenks in einer schematischen Schnittansicht gemäss einer Schnittlinie in Richtung der Drehachse.

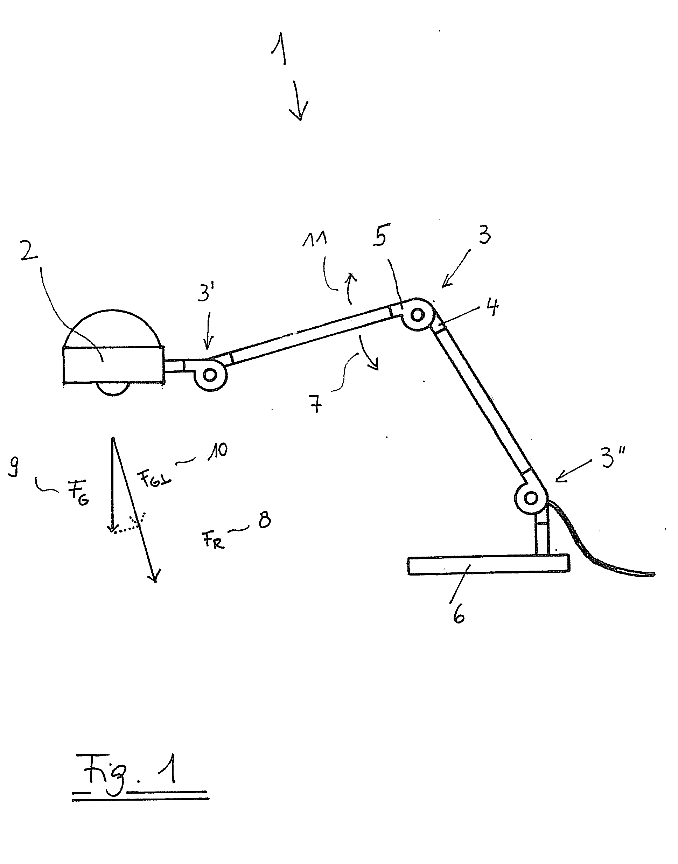

Figur 1 zeigt eine Seitenansicht eines schematisch dargestellten Gelenkarms 1 mit einem gehaltenen Gegenstand 2, in diesem Fall einem Leuchtkörper. Der Gelenkarm 1 umfasst drei Drehgelenke 3, 3', 3''. Das Drehgelenk 3 besteht aus einem ersten Gelenkteil 4 und einem zweiten Gelenkteil 5, die zueinander gegen eine Reibkraft drehbar sind. Der Gelenkarm 1 ist an einem Standfuss 6 befestigt.

Um den Leuchtkörper 2 nach unten, in eine Drehrichtung 7 zu bewegen, muss eine Kraft F_{R} 8 aufgebracht werden, die der Reibungskraft entspricht. Damit das Drehgelenk 3 nicht unter der Gewichtskraft F_{G} 9 nachgibt, muss der in der Drehrichtung 7 wirkende Anteil der Gewichtskraft F_{G}⊥ 10 kleiner sein als die Kraft F_{R} 8.

In umgekehrter Drehrichtung 11 muss der Benutzer die Schwerkraft F_{G} 9 des Leuchtkörpers überwinden. In dieser Richtung sollte die Reibungskraft daher möglichst gering sein.

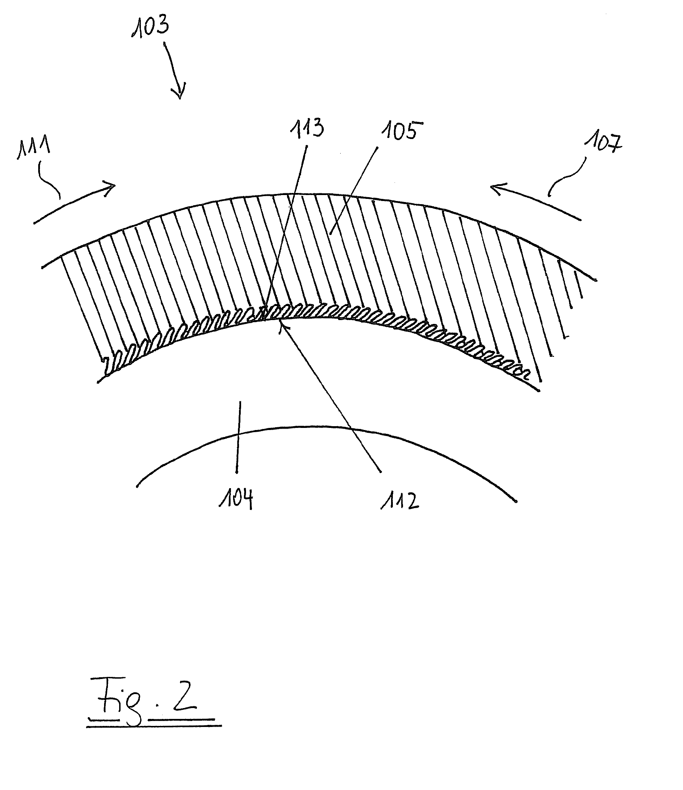

Figur 2 zeigte einer erste Ausführungsform eines Drehgelenks 103 in einer schematischen Schnittansicht gemäss einer Schnittlinie senkrecht zur Drehachse. Das Drehgelenk 103 umfasst ein erstes Gelenkteil 104 mit einer ersten Kontaktfläche 112, die mit der Kontaktfläche 113 eines zweiten Gelenkteils 105 in einer Reibverbindung steht.

Die Textur der zweiten Kontaktfläche 113 ist so ausgeführt, dass bei einer Drehung des ersten Gelenkteils 104 gegenüber dem zweiten Gelenkteil in einer Drehrichtung 111 die Kontaktflächen 112, 113 leichter gegeneinander rutschen als in der umgekehrten Drehrichtung 107.

Die Kontaktflächen 112, 113 sind derart ausgestaltet, dass die Reibkraft in der einen Richtung 107 grösser als in der anderen Richtung 111 ist.

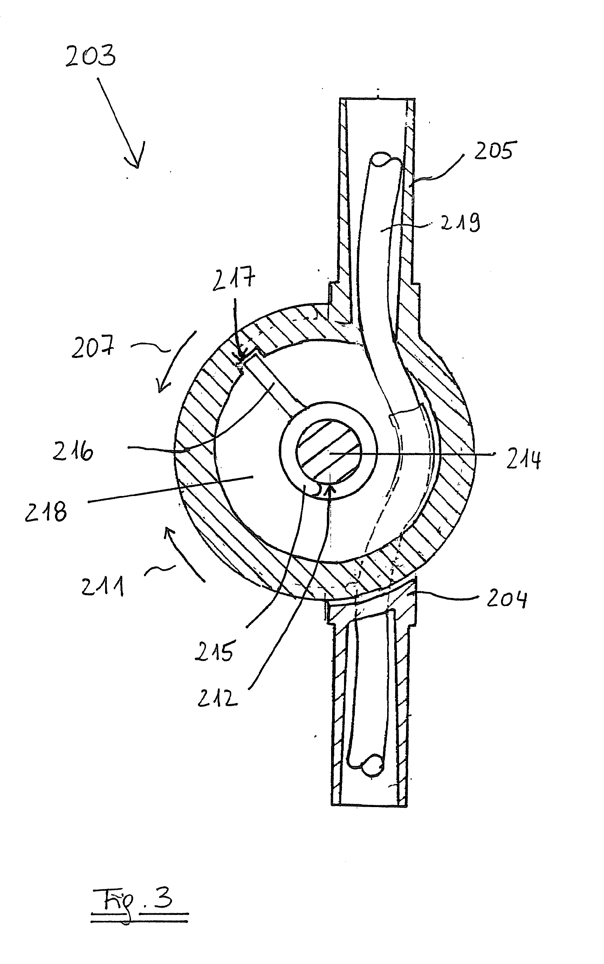

Figur 3 zeigt eine zweite Ausführungsform eines Drehgelenks 203 in einer schematischen Schnittansicht gemäss einer Schnittlinie senkrecht zur Drehachse.

Das Drehgelenk 203 besteht aus einem ersten Gelenkteil 204, das eine Welle 214 umfasst. Die Aussenfläche der Welle 214 bildet eine erste Kontaktfläche 212, die mit einer Schlingfeder 215 in Reibkontakt steht.

Das eine Schraubfederende 216 der Schlingfeder 215 ist in einer Mitnehmeröffnung 217 gehalten, welche in dem zweiten Gelenkteil 205 ausgebildet ist. Die Schlingfeder 215 bildet somit einen Formschluss mit dem zweiten Gelenkteil 205. Die Gelenkteile 204, 205 sind als zylinderförmige Halbschalen ausgeführt, die im Inneren genügend Raum 218 bieten, um die Durchführung eines Kabels 219 zu erlauben. Anders als in der Figur gezeigt kann das Kabel 219 auch als Schlaufe um die Welle 214 geführt sein, damit bei einer Drehung der Gelenkteile 204, 205 keine Zugkräfte auf das Kabel 219 entstehen.

Wird die Schlingfeder 215 über den Mitnehmer 217 in einer ersten Drehrichtung 207 bewegt, so wird die Schlingfeder 215 etwas gespannt und hat gegenüber der Welle 214 eine erhöhte Klemmkraft, was zu einer grösseren Hemmung führt. In umgekehrter Richtung 211 wird die Schlingfeder 215 entspannt und tendenziell aufgeweitet, so dass sie sich vergleichsweise leicht auf der Welle 214 drehen lässt.

Die Gelenkteile 204, 205 sind bevorzugt aus Metall, z.B. aus Zinkdruckguss gefertigt. Die Welle 214 ist beispielsweise aus einem hochfesten Stahl, z.B. ETG 100 hergestellt. Bei der Schlingfeder 215 handelt es sich bevorzugt um eine Feder aus rostfreiem Federstahl.

In einer bevorzugten Ausführungsform hat der Gelenkarm 1 zwei erfindungsgemässe Drehgelenke, ein Mittelgelenk 3 und ein Fussgelenk 3''.

Am Mittelgelenk 3 ist eine Welle 214 mit einem Aussendruchmesser von 22 mm vorgesehen und eine Schlingfeder 215 aus einem Rechteckdraht der Materialstärke 2 mm x 2 mm mit einer Wicklungszahl von 4 und einem Innendruchmesser von 21,6 mm.

Das Drehmoment in der einen Richtung liegt zwischen 2.8 Nm und 3.3 Nm, in der anderen Richtung bei etwa 0,3 Nm.

Am Fussgelenk 3'' ist eine Welle 214 mit einem Aussendruchmesser von 30 mm vorgesehen und eine Schlingfeder 215 aus einem Rechteckdraht der Materialstärke 2.5 mm x 2.5 mm mit einer Wicklungszahl von 3 und einem Innendruchmesser von 28.4 mm.

Das Drehmoment in der einen Richtung liegt zwischen 8.3 Nm und 9.3 Nm, in der anderen Richtung bei etwa 1,5 Nm.

Bei einer Drehung der Gelenkteile 204, 205 in der Richtung 207, in welcher die Klemmwirkung der Feder 215 erhöht wird, muss unter Umständen zunächst die Haftreibung zwischen Feder 215 und Welle 214 überwunden werden, ehe die Gleitreibung einsetzt. Zu Beginn der Drehung kann daher ein etwas höheres Drehmoment notwenig sein, als im Verlauf der Drehung.

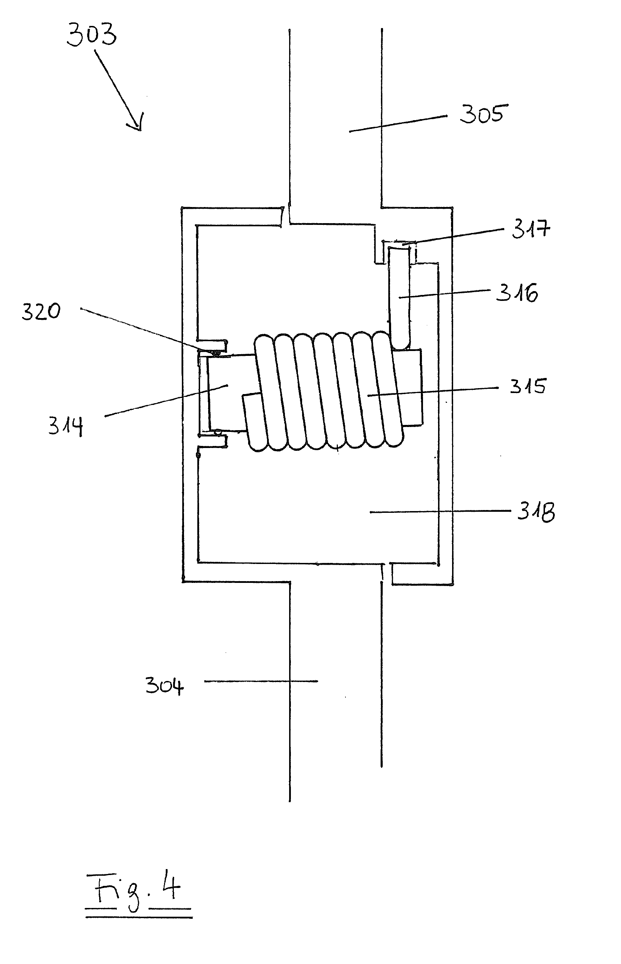

Figur 4 zeigt eine dritte Ausführungsform eines Drehgelenks 303 in einer schematischen Schnittansicht gemäss einer Schnittlinie in Richtung der Drehachse.

Das Drehgelenk besteht wiederum aus einem ersten Gelenkteil 304, einem zweiten Gelenkteil 305, einer Schlingfeder 315 und einer Welle 314.

Das Schraubfederende 316 der Schlingfeder 315 ist formschlüssig in einer Mitnehmeröffnung 317 des zweiten Gelenkteils 305 aufgenommen. Die Schlingfeder 315 mit bildet einen Reibschluss mit der Oberfläche 312 der Welle 314.

Die Welle 315 ist über ein Reibmittel 320 mit dem ersten Gelenkteil 304 verbunden.

Auch in diesem Beispiel ist innerhalb des Drehgelenks 303 genügend Raum 318 vorhanden, um die Durchführung eines nicht explizit gezeigten Kabels zu ermöglichen.

Welle 315 und Schlingfeder 314 sind so ausgebildet, dass bei einer Drehung des ersten Gelenkteils 305 in einer Richtung die Feder 314 öffnet und sich leicht auf der Welle 315 drehen lässt. Gleichzeitig sorgt die Reibkraft zwischen Welle 315 und erstem Gelenkteil 304 dafür, dass die Welle 315 sich gegenüber dem ersten Gelenkteil 304 nicht bewegt. In umgekehrter Richtung wird die Feder 315 gespannt und klemmt auf der Welle 314. Die Haftreibung zwischen Welle 314 und Feder 315 ist grösser als die Reibkraft zwischen Welle 314 und erstem Gelenkteil 304, so dass sich in dieser Richtung die Welle 314 mit der Feder 315 gegen das erste Gelenkteil 304 dreht.

## Patentansprüche

1. Gelenkarm zur Halterung eines Gegenstandes, insbesondere einer Lampe, mit mindestens einem Drehgelenk, bestehend aus mindestens zwei relativ zueinander gegen eine Reibkraft drehbaren Gelenkteilen, **dadurch gekennzeichnet, dass** den Gelenkteilen (4, 5; 104, 105; 204, 205; 304, 304) jeweils mindestens eine Kontaktfläche (112, 113; 212; 312) zugeordnet ist, dass die Kontaktflächen (112, 113; 212; 312) der Gelenkteile (4, 5; 104, 105; 204, 205; 304, 304) jeweils miteinander in einer Reibverbindung stehen, wobei die Kontaktflächen (112, 113; 212; 312) derart ausgelegt sind, dass die Reibkraft von der Drehrichtung (7, 11; 107, 111; 207, 211) abhängig ist, insbesondere in der einen Drehrichtung (7; 107; 207) grösser als in der entgegen gesetzten Drehrichtung (11; 111; 211) ist.

2. Gelenkarm gemäss Anspruch 1, **dadurch gekennzeichnet, dass** das Drehgelenk (3, 3', 3''; 103; 203; 303) eine Schlingfeder (215; 315) enthält, die mit der Kontaktfläche (112; 212; 312) des ersten Gelenkteils (4; 104; 205; 304) reibschlüssig und mit dem zweiten Gelenkteil (5; 105; 205; 305) insbesondere formschlüssig verbindbar oder verbunden ist.

3. Gelenkarm gemäss Anspruch 2 **dadurch gekennzeichnet, dass** das erste Gelenkteil (4; 104; 205; 304) eine Welle (214; 314) umfasst, bezüglich derer die Schlingfeder (215; 315) koaxial angeordnet ist.

4. Gelenkarm gemäss mindestens einem der Ansprüche 1 bis 3, **dadurch gekennzeichnet, dass** in einer Richtung (7; 107; 207) das Reibungsdrehmoment zwischen 2 Nm und 50 Nm liegt, bevorzugt zwischen 8 Nm und 11 Nm, und in der entgegen gesetzten (11; 111; 211) Richtung zwischen 0.25 Nm und 10 Nm, bevorzugt zwischen 1.3 Nm und 1.7 Nm, insbesondere dass der Durchmesser und/oder das Material der Welle (214; 314) und/oder der Durchmesser, das Material, die Materialstärke und/oder die Federkraft der Schlingfeder (215; 315) entsprechend ausgelegt sind.

5. Gelenkarm gemäss mindestens einem der Ansprüche 1 bis 4, **dadurch gekennzeichnet, dass** an dem Drehgelenk (3, 3', 3''; 103; 203; 303) mindestens ein Anschlag vorgesehen ist, der den Drehwinkel zwischen dem ersten Gelenkteil (4; 104; 205; 304) und dem zweiten Gelenkteil (5; 105; 205; 305) einschränkt.

6. Gelenkarm gemäss mindestens einem der Ansprüche 1 bis 5, **dadurch gekennzeichnet, dass** die Gelenkteile (4, 5; 104, 105; 204, 205; 304, 305) ein Reibgelenk mit einer zusätzlichen richtungsunabhängigen Reibkraft bilden, insbesondere mit einer einstellbaren Reibungskraft.

7. Gelenkarm gemäss mindestens einem der Ansprüche 1 bis 6, mit einem an dem Gelenkarm anzubringenden Gegenstand,
**dadurch gekennzeichnet, dass** die Reibkraft (8) in der einen Drehrichtung (7; 107; 207) mindestens so gross ist wie die Gewichtskraft (10) des anzubringenden Gegenstandes (2), insbesondere dass die Welle (214; 314) und/oder die Schlingfeder (215; 315) entsprechend ausgelegt sind.

8. Verwendung einer Schlingfeder in einem Gelenkarm (1; 201; 301) zur Halterung eines Gegenstandes (2), insbesondere einer Lampe, mit mindestens einem Drehgelenk (3, 3', 3''; 103; 203; 303), bestehend aus mindestens zwei relativ zu einander drehbaren Gelenkteilen (4, 5; 204, 205; 304, 305) und mindestens einer Welle (214; 314), wobei die Schlingfeder (215; 315) mit der Welle (214; 314) reibschlüssig und mit dem zweiten Gelenkteil (5; 205; 305) insbesondere formschlüssig verbindbar ist.

9. System zur Bildung eines Gelenkarms, insbesondere gemäss mindestens einem der Ansprüche 1-6, mit mindestens einem ersten Gelenkteil (4; 204; 304) und einem zweiten Gelenkteil (5; 205; 305) sowie mindestens einer Schlingfeder (215; 315), wobei die Schlingfeder (215; 315) mit dem ersten Gelenkteil (4; 204; 304) reibschlüssig und mit dem zweiten Gelenkteil (5; 205; 305) insbesondere formschlüssig verbindbar ist.
